# EUROPEAN PATENT SPECIFICATION

(11) **EP 4 640 757 B1**
(45) Date of publication and mention of the grant of the patent: **09.12.2026**
(21) Application number: 24172103.4
(22) Date of filing: 24.04.2024
(51) Int. Cl.: C08L 23/12

(54) **POLYOLEFIN COMPOSITION COMPRISING RECYCLED PLASTIC MATERIAL, AN ELASTOMER AND A POLYPROPYLENE HOMOPOLYMER**
POLYOLEFINZUSAMMENSETZUNG MIT RECYCELTEM KUNSTSTOFFMATERIAL, EINEM ELASTOMER UND EINEM POLYPROPYLENHOMOPOLYMER
COMPOSITION DE POLYOLÉFINE COMPRENANT UNE MATIÈRE PLASTIQUE RECYCLÉE, UN ÉLASTOMÈRE ET UN HOMOPOLYMÈRE DE POLYPROPYLÈNE

(43) Date of publication of application: 29.10.2025
(73) Proprietor: Borealis GmbH, 1020 Vienna (AT)
(72) Inventor: TORRES, Juan Pablo, 4021 Linz (AT); JERABEK, Michael, 4021 Linz (AT); MILEVA, Daniela, 4021 Linz (AT); KAHLEN, Susanne Margarete, 4021 Linz (AT)
(74) Representative: Maikowski & Ninnemann Patentanwälte Partnerschaft mbB

(56) References cited:
- US-A1- 2020 385 555
- US-A1- 20230 279 204
- US-A1- 20230 383 109

## Description

The invention relates to a polyolefin composition comprising recycled plastic material, at least one elastomer and at least one polypropylene homopolymer. The invention also relates to an article comprising the polyolefin composition.

### Description

Polyolefins, in particular polyethylene and polypropylene are increasingly consumed in large amounts in a wide range of applications, including packaging for food and other goods, fibres, automotive components, and a great variety of manufactured articles. Polyethylene based materials are a particular problem as these materials are extensively used in packaging. Taking into account the huge amount of waste collected compared to the amount of waste recycled back into the stream, there is still a great potential for intelligent reuse of plastic waste streams and for mechanical recycling of plastic wastes.

One major trend in the field of polyolefins is the use of recycled materials, which are derived from a wide variety of sources. Durable goods streams such as those derived from yellow bags, yellow bins, community collections, waste electrical equipment (WEE) or end-of-life vehicles (ELV) contain a wide variety of plastics. These materials can be processed to recover acrylonitrile-butadiene-styrene (ABS), high impact polystyrene (HIPS), polypropylene (PP) and polyethylene (PE) plastics. Separation can be carried out using density separation in water and then further separation based on fluorescence, near infrared absorption or raman fluorescence. However, it is commonly quite difficult to obtain either pure recycled polypropylene or pure recycled polyethylene.

Generally, recycled quantities of polypropylene on the market are mixtures of both polypropylene (PP) and polyethylene (PE), this is especially true for post-consumer waste streams. Moreover, commercial recyclates from post-consumer waste sources are conventionally cross-contaminated with non-polyolefin materials such as polyethylene terephthalate, polyamide, polystyrene or non-polymeric substances like wood, paper, glass or aluminum. These cross-contaminations drastically limit final applications of recycling streams such that no profitable final uses remain. Polyolefinic recycling materials, especially from post-consumer waste streams, are a mixture of PE and PP. The better the quality of the recyclate is, the less available it is and the more expensive it is.

It is well known in the art that a higher impact strength can be achieved through the addition of elastomers acting as compatibilizers such as ethylene-propylene rubbers which, however, limit the stiffness of the resulting compositions. Moreover, many of these elastomers are only available as higher molecular weight versions or in nonpelletized form, the latter requiring specific mixing equipment.

EP 0 575 465 B1 covers a polymer blend composition comprising (a) 30 - 70 wt% of low melting polymer comprising an ethylene/α-olefin copolymer having a density of from 0.88 - 0.915 g/cm³, an MFR of 1.5 - 7.5 dg/min, a molecular weight distribution no greater than 3.5, a composition distribution breadth index greater than 70 percent and an essentially single melting point in the range of 60 °C to 115 °C measured as a DSC peak Tm; and (b) 70 - 30 wt% of a propylene based polymer having from 88 to 100 mole percent propylene and from 12 to 0 mole percent of an alpha-olefin other than propylene.

US 5,266,392 A claims a polyethylene/ polypropylene blend, comprising ≥ 50 wt% of crystalline polypropylene; at least about 10 wt% of linear low density polyethylene having a density of about 0.915 to about 0.94 dispersed in a matrix of said polypropylene; and an amount of an ethylene/alpha-olefin plastomer compatibilizer having an alpha-olefin content of from ~5 - ~25 mol%, a melt index of above about 50 dg/min, a weight average molecular weight between about 5000 and about 50,000, a density of from about 0.88 about 0.90 g/cm³ and an X-ray crystallinity of at least 10%. This covers the use of plastomers as compatibilizers in a very general way, including of course recycling. Only rather low and rather high densities are excluded for the plastomer, but pure HDPE is also excluded.

WO 2015/169690 A1 refers to polypropylene-polyethylene blends comprising (A) 75 - 90 wt% of a blend of (A-1) 30 - 70 wt% of polypropylene and (A-2) 70 - 30 wt% of polyethylene and (B) 10 - 25 wt % of a compatibilizer being a heterophasic polyolefin composition comprising (B-I) 55 - 90 wt% of a polypropylene with an MFR₂ between 1.0 and 300 g/10 min (according to ISO 1133 at 230°C at a load of 2.16 kg) and (B-2) 45 - 10 wt% of a copolymer of ethylene and propylene or C4 to C10 alpha olefin with a glass transition temperature Tg (measured with DMTA) of below -25°C and an intrinsic viscosity (measured in decalin at 135°C) of at least 3.0 dl/g, whereby the blend has (i) a Charpy Notched Impact Strength (according to ISO 179-leA, measured at 23 °C) of at least 2% higher than for the same blend without the compatibilizer (B) and at the same time (ii) a Flexural Modulus (according to ISO 178) of at least 3% higher than for the same blend without the compatibilizer (B) and additionally (iii) a heat deflection resistance (determined with DMTA) expressed by the temperature at which the storage modulus G' of 40 MPa is reached (T(G' = 40 MPa)) which is at least 4°C higher than for the same blend without the compatibilizer (B).

WO2020/089196 A1 discloses a polyethylene-polypropylene composition obtainable by blending a) 80 to 97 wt.-% of a recycled blend (A) comprising A-1) polypropylene and A-2) polyethylene, wherein the weight ratio of polypropylene to polyethylene is from 3:7 to 7:3,and b) 3 to 20 wt.-% of a compatibilizer (B) being a C2C8 plastomer.

WO2020/201084 A1 is directed to a polyethylene-polypropylene composition, obtainable by blending a) 75.0 to 94.0 wt.-%, based on the overall weight of the polyethylene-polypropylene composition, of a recycled blend (A) comprising polypropylene, and polyethylene, wherein the weight ratio of polypropylene to polyethylene is in the range of 3:7 to 7:3, and b) 6.0 to 25.0 wt.-%, based on the overall weight of the polyethylene-polypropylene composition, of a compatibilizer (B) being a copolymer of 1-butene and ethylene.

For many engineering applications the limiting factor for a wider use of recyclates, is among others, their poor impact performance. As described in the prior art, the use of specific elastomers or plastomers can help to boost the toughness of the recyclate based compound.

On the other hand, the use of plastomers may reduce stiffness & viscosity, two important properties for customers. In addition, other properties may also be affected.

Thus, it was an object of the present invention to provide a polyolefin composition comprising polyolefin material recovered from household waste plastic material without the disadvantages of the polymer compositions according to the prior art. In particular, a compound solution of a virgin material in combination with a recyclate is of an urgent need to balance out the above mentioned issues and to serve advanced material products for the market.

This object has been solved by providing a polyolefin composition comprising:
a) 60 to 85 wt% (based on the overall weight of the polyolefin composition) of a blend of recycled plastic material comprising polypropylene and polyethylene in a ratio between 14:6 and 49.5:1,
b) 10 to 30 wt% (based on the overall weight of the polyolefin composition) of at least one C2/C4 and/or C2/C8 elastomer as compatibilizer having an MFR₂ (ISO1133, 2.16 kg load at 190 °C) of equal or below 30 g/ min,
c) 3 to 10 wt% (based on the overall weight of the polyolefin composition) of polypropylene homopolymer with MFR₂ (ISO1133, 2.16 kg load at 230 °C) of at least 800 g/10 min, and
d) optionally further additives, wherein the sum of all ingredients always adds up to 100 wt%,
wherein the polyolefin composition has
- an impact strength (ISO179-1, Charpy 1eA +23°C) of at least 30 kJ/m²,
- a melt flow rate MFR₂ (230°C, 2.16 kg, measured according to ISO 1133) of at least 15 g/10 min, and
- a tensile break (Iso 527-2) of at least 80%.

Accordingly, a blend of polypropylene and polyethylene is mixed with an elastomer and a virgin polypropylene homopolymer with a high melt flow rate, to obtain a polyolefin composition with excellent mechanical properties. In particular, the present polyolefin composition combining a blend of polypropylene and polyethylene with elastomer and high flow polypropylene homopolymer enabled the achievement of balanced compound behaviour for suitcase applications.

The present polyolefin composition is characterized by a balanced property profile that is only based on a blend of polypropylene and polyethylene, elastomer and virgin copolymers. The use of the elastomer and high flow virgin polypropylene homopolymer boosts the toughness and impact performance of the blend of polypropylene and polyethylene. At the same time stiffness and viscosity of the blend of polypropylene and polyethylene containing composition (two important properties for customers) is not hampered. The balanced compound properties make the present polyolefin composition interesting for many engineering applications. It was in particular surprising that a good toughness could be provided by polyolefin composition comprising a high amount of a blend of polypropylene and polyethylene of over 55 wt% and up to 85 wt% a good property profile with.

The amount of the blend comprising polypropylene and polyethylene in a ratio between 14 :6 and 49.5:1 , preferably 15:5 and 49.5:1, more preferably 16:4 and 49.5:1, even more preferably 17:3 and 49.5:1, such as a blend of recycled plastic material comprising polypropylene and polyethylene, which is recovered from a waste plastic material derived from post-consumer and/or post-industrial waste, used in the present polyolefin composition is according to the invention in a range between 55-85 wt%, preferably between 60-80 wt%, more preferably between 65-75 wt% (based on the overall weight of the polyolefin composition).

For the purposes of the present description and of the subsequent claims, the term "recycled" is used to indicate that the material is recovered from post-consumer waste and/or industrial waste. Namely, post-consumer waste refers to objects having completed at least a first use cycle (or life cycle), i.e. having already served their first purpose and been through the hands of a consumer; while industrial waste refers to the manufacturing scrap which does normally not reach a consumer. In the gist of the present invention "recycled polymers" may also comprise up to 17 wt%, preferably up to 3 wt%, more preferably up to 1 wt% and even more preferably up to 0.1 wt% based on the overall weight of the recycled polymer of other components originating from the first use. Type and amount of these components influence the physical properties of the recycled polymer. The physical properties given below refer to the main component of the recycled polymer.

As described also further below, typical other components originating from the first use are thermoplastic polymers, like polystyrene and PA 6, talc, chalk, ink, wood, paper, limonene and fatty acids. The content of polystyrene (PS) and polyamide 6 (PA 6) in recycled polymers can be determined by Fourier Transform Infrared Spectroscopy (FTIR) and the content of talc, chalk, wood and paper may be measured by Thermogravimetric Analysis (TGA).

The total amount of the at least one C2/C4 or C2/C8 elastomer used in the present polyolefin composition adds up according to the invention to a range between 10-30 wt%, preferably between 15-25 wt%, more preferably between 18-23 wt% (based on the overall weight of the polyolefin composition).

The term "virgin" denotes the newly produced materials and/or objects prior to first use and not being recycled. In case that the origin of the polymer is not explicitly mentioned the polymer is a "virgin" polymer.

The total amount of any virgin polypropylene homopolymer used in the present polyolefin composition may add up according to the invention to a range between 3-10 wt%, preferably between 4-8 wt%, more preferably between 5-6 wt% (based on the overall weight of the polyolefin composition).

It is to be understood that further additives may also be included in the polyolefin composition and the sum of all ingredients adds always up to 100 wt% in each of the embodiments described herein.

It is further to be understood that the polyolefin composition may be (essentially) free of any (virgin) polypropylene block copolymer. Such block copolymers comprise two or more homopolymer subunits linked by covalent bonds.

Furthermore, the polyolefin composition may be (essentially) free of any heterophasic propylene copolymer. Such heterophasic propylene copolymers may comprise randomly inserted ethylene or butene as comonomer. This applies for any added virgin heterophasic polypropylene polymer, but does not include any possible trace amounts of any heterophasic polypropylene polymer that may still be present in the recycled material.

It is to be understood that the present polyolefin composition does not contain talc (except the amounts present in the recyclate), glass fibers, or any other solid material.

According to an embodiment, the present polyolefin composition comprises
a) 63 to 80 wt%, preferably 65 to 75 wt% (based on the overall weight of the polyolefin composition) of a blend of recycled plastic material comprising polypropylene and polyethylene in a ratio between 14:6 and 49.5:1,
b) 15 to 25 wt%, preferably 18 to 23 wt% (based on the overall weight of the polyolefin composition) of at least one C2/C4 and/or C2/C8 elastomer as compatibilizer having an MFR₂ (ISO1133, 2.16 kg load at 190 °C) of equal or below 30 g/ min,
c) 4 to 9 wt%, more preferably 5 to 7 wt% (based on the overall weight of the polyolefin composition) of polypropylene homopolymer with MFR₂ (ISO1133, 2.16 kg load at 230 °C) of at least 800 g/10 min, and
d) optionally further additives, wherein the sum of all ingredients always adds up to 100 wt%.

### Polyolefin composition

The composition according to the invention preferably shows a superior balance of properties in regard of flowability, as can be seen from the melt flow rate, impact properties and especially mechanical properties, such as in in regard of the tensile properties.

The present polyolefin composition may have one or more, preferably all of the properties as described in the following.

In an embodiment, the present polyolefin composition has an impact strength (ISO179-1, Charpy 1eA +23°C) of at least 35.0 kJ/m², preferably of at least 40.0 kJ/m², in particular in a range between 30.0 and 60.0 kJ/m², more in particular in a range between 35.0 and 55.0 kJ/m², even more particular in a range between 40.0 and 55.0 kJ/m².

In an further embodiment, the polyolefin composition has a melt flow rate MFR₂ (ISO 1133, 2.16 kg, 230°C) of at least 16.0 g/ 10 min, preferably at least 17.5 g/10 min, more preferably at least 17.5 g/10 min, in particular in a range between 15.0 and 30.0 g/10 min, preferably between 16.0 and 25.0 g/10min, more preferably between 17.0 and 20.0 g/10 min.

In another embodiment, the present polyolefin composition has a tensile break (ISO 527-2) of at least 90%, more preferably of at least 100%, even more preferably of at least 150%, still more preferably of at least 200 %, in particular in a range between 80% and 400%, preferably between 90% and 300%, more preferably between 100% and 250%.

In still a further embodiment, the present polyolefin composition has a tensile modulus (ISO 527-2) of at least 800 MPa, preferably of at least 850 MPa, more preferably of at least 870 MPa, in particular in a range between 800 and 1500 MPa, more in particular in a range between 850 and 1000 MPa.

Further, the composition preferably has a tensile strength of at least 10 MPa, preferably of at least 15 MPa, more preferably of at least 16 MPa, even more preferably of at least 17 MPa, in particular in a range between 10 and 25 MPa, more in particular in a range between 15 and 20 MPa.

In another embodiment, the present polyolefin composition has a puncture energy at 23 °C (ISO 6603-2, 23°C) of at least 25.0 J, preferably of at least 30.0 J, more preferably of at least 32.0 J, in particular in a range between 25.0 and 50.0 J, more in particular in a range between 30.0 and 40.0 J, even more particular in a range between 32.0 and 37.0 J.

In a preferred embodiment, the present polyolefin composition may have one or more, preferably all of the following properties:
- an impact strength (ISO179, Charpy 1eA +23°C) in a range between 30.0 and 60.0 kJ/m², more in particular in a range between 35.0 and 55.0 kJ/m², even more particular in a range between 40.0 and 55.0 kJ/m²;
- a melt flow rate MFR₂ (230°C, 2.16 kg, measured according to ISO 1133-1) in a range between 15.0 and 30.0 g/10 min, preferably between 16.0 and 25.0 g/10min, more preferably between 17.0 and 20.0 g/10 min;
- a puncture energy (ISO 6603-2, 23°C) in a range between 25.0 and 50.0 J, more in particular in a range between 30.0 and 40.0 J, even more particular in a range between 32.0 and 37.0 J;
- a tensile strain at break (ISO 527-2, 23°C) in a range between 80% and 400%, preferably between 90% and 300%, more preferably between 100% and 250%;
- a tensile modulus (ISO 527-2, 23°C) in a range between 800 and 1500 MPa, more in particular in a range between 850 and 1000 MPa.

### Blend of recycled plastic material

The blend of recycled plastic material used in the present case is obtained from a recycled waste stream. The blend can be either recycled post-consumer waste or post-industrial waste, such as for example from the automobile industry, or alternatively, a combination of both. It is particularly preferred that blend consists of recycled post-consumer waste and/or post-industrial waste.

In one aspect blend may be a polypropylene (PP) rich material of recycled plastic material that comprises significantly more polypropylene than polyethylene. Recycled waste streams, which are high in polypropylene can be obtained for example from the automobile industry, particularly as some automobile parts such as bumpers are sources of fairly pure polypropylene material in a recycling stream or by enhanced sorting. PP rich recyclates may also be obtained from yellow bag feedstock when sorted accordingly. The PP rich material may be obtainable by selective processing, degassing and filtration and/or by separation according to type and colors such as NIR or Raman sorting and VIS sorting. It may be obtained from domestic waste streams (i.e. it is a product of domestic recycling) for example the "yellow bag" recycling system organized under the "Green dot" organization, which operates in some parts of Germany.

Preferably, the polypropylene rich recycled material is obtained from recycled waste by means of plastic recycling processes known in the art. Such PP rich recyclates are commercially available, e.g. from Corepla (Italian Consortium for the collection, recovery, recycling of packaging plastic wastes), Resource Plastics Corp. (Brampton, ON), Kruschitz GmbH, Plastics and Recycling (AT), Vogt Plastik GmbH (DE), mtm Plastics GmbH (DE) etc. None exhaustive examples of polypropylene rich recycled materials include: Dipolen^{®}PP, Purpolen^{®}PP (Mtm Plastics GmbH), MOPRYLENE PC B-420 White, MOPRYLENE PC B 440 (Morssinkhof Plastics, NL), , SYSTALEN PP-C24000; Systalen PP-C44000; Systalen PP-C14901, Systalen PP-C17900, Systalen PP-C2400, Systalen 13704 GR 015, Systalen 13404 GR 014, Systalen PP-C14900 GR000 (Der Grüne Punkt, DE), Vision (Veolia) PPC BC 2006 HS or PP MONO.

It is considered that the present invention could be applicable to a broad range of recycled polypropylene materials or materials or compositions having a high content of recycled polypropylene. The polypropylene-rich recycled material may be in the form of granules.

As mentioned previously, the polyolefin composition in accordance with the present invention comprises as blend a polymer blend, comprising polypropylene and polyethylene; wherein the weight ratio of polypropylene to polyethylene is from 14:6 to 49:1; and wherein the polymer blend is a recycled material.

Still a further preferred embodiment of the present invention stipulates that the ratio of polypropylene to polyethylene is from 15:5 to 49:1 and preferably from 16:4 to 49:1. The weight ratio of polypropylene to polyethylene is preferably from 17:3 to 49:1.

According to one embodiment, the blend of recycled plastic material comprises a relative amount of units derived from propylene of greater than 50 wt%, preferably greater than 53 wt%, more preferably greater than 60 wt%, more preferably greater than 70 wt%, more preferably greater than 75 wt%, more preferably greater than 80 wt%, still more preferably greater than 90 wt% and even more preferably greater than 95 wt% with respect to the total weight of the composition of blend.

Still a further preferred embodiment of the present invention stipulates that the content of polypropylene in the recycled blend is in the range from 75 - 99 wt% and preferably in the range from 83 - 95 wt% based on the overall weight of blend of recyclate material. The content of polypropylene in blend may be determined by FTIR spectroscopy as described in the experimental section. More preferably the polypropylene component of the recyclate blend comprises more than 95 wt%, preferably from 96 - 99.9 wt% isotactic polypropylene and most preferably consists of isotactic polypropylene.

Furthermore, the blend may have a relative amount of units derived from ethylene of less than 47 wt%, more preferably less than 40 wt%, more preferably less than 30 wt%, more preferably less than 20 wt%, most preferably less than 10 wt%. The recyclate blend preferably comprises units derived from ethylene in an amount of from 5.0 to 17.5 wt.-%, more preferably from 6.0 to 15.0 wt.-%, still more preferably from 7.5 to 13.0 wt.-%. Usually, the relative amount of units derived from ethylene is more than 5 wt% with respect to the total weight blend It is to be understood that the ethylene present is preferably ethylene derived from polyethylene and ethylene containing copolymers.

In another preferred embodiment of the present invention the content of polyethylene in the blend is in the range from 1 - 25 wt%, preferably in the range from 5 - 20 wt% and more preferably in the range from 7 - 17 wt% based on the overall weight of the recycled blend. The content of polyethylene in the recycled blend may be determined by CRYSTEX as described in the experimental section. More, preferably component consists of polyethylene and ethylene containing copolymers.

The blend of recycled plastic material is suitably characterized by CRYSTEX QC analysis. In the CRYSTEX QCanalysis, a crystalline fraction (CF) and a soluble fraction (SF) are obtained which can be quantified and analyzed in regard of the monomer and comonomer content as well as the intrinsic viscosity (iV).

In an embodiment, the mixed-plastics polypropylene blend of recycled material has an ethylene C2 content (as determined according to CRYSTEX analysis) in the range from 5 to 20 wt%, more preferably from 5 to 15 wt%, even more preferably from 11 to 13 wt%. The use of a propylene recyclate with a C2 content of less than 13 wt% is preferred.

The blend of recycled plastic material shows the following properties in the CRYSTEX analysis:
- a crystalline fraction (CF) content determined according to CRYSTEX analysis in the range from 80.0 to 96.0 wt%, preferably in the range from 82.5 to 95.5 wt%, more preferably in the range from 85.0 to 95.0 wt%, and
- a soluble fraction (SF) content determined according to CRYSTEX QC analysis in the range from 4.0 to 20.0 wt%, preferably in the range from 4.5 to 17.5 wt%, more preferably in the range from 5.0 to 15.0 wt%.

Said crystalline fraction (CF) has one or more, preferably all of the following properties:
- an ethylene content (C2(CF)), as determined by FT-IR spectroscopy calibrated by quantitative ¹³C-NMR spectroscopy, in the range from 2.5 to 20.0 wt%, preferably in the range from 3.5 to 18.0 wt%, more preferably in the range from 5.0 to 15.0wt%; and/or
- an intrinsic viscosity (iV(CF)), as measured in decalin according to DIN ISO 1628/1 at 135°C, of less than 2.5 dl/g, preferably in the range from 1.1 to 2.5 dl/g, more preferably in the range from 1.2 to 2.5 dl/g, still more preferably in the range from 1.4 to 2.0 dl/g,

Said soluble fraction (SF) has one or more, preferably all of the following properties:
- an ethylene content (C2(SF)), as determined by FT-IR spectroscopy calibrated by quantitative ¹³C-NMR spectroscopy, preferably in the range from 20.0 to 55.0 wt%, preferably in the range from 22.0 to 50.0 wt%, more preferably in the range from 24.0 to 45.0 wt%; and/or
- an intrinsic viscosity (iV(SF)), as measured in decalin according DIN ISO 1628/1 at 135°C, in the range from 0.9 to 2.3 dl/g, preferably in the range from 1.0 to 2.2 dl/g, more preferably in the range from 1.1 to 2.1 dl/g, for example in the range from 1.8 to 2.1 dl/g.

The polyethylene fraction of the recycled material can comprise recycled high-density polyethylene (rHDPE), recycled medium-density polyethylene (rMDPE), recycled low-density polyethylene (rLDPE), linear low density polyethylene (LLDPE) and the mixtures thereof. In a certain embodiment, the recycled material is high density PE with an average density of greater than 0.8 g/cm³, preferably greater than 0.9 g/cm³, most preferably greater than 0.91 g/cm³.

Another preferred embodiment of the present invention stipulates that the recyclate blend comprises less than 5 wt%, preferably less than 3 wt% and more preferably from 0.01 to 2 wt% based on the overall weight of the recyclate blend of thermoplastic polymers different from polypropylene and polyethylene, more preferably less than 4.0 wt% PA 6 and less than 5 wt% polystyrene, still more preferably blend comprises 0.5 - 3 wt% polystyrene.

According to still another preferred embodiment of the present invention the recyclate blend comprises less than 5 wt%, preferably less than 4 wt% and more preferably from 0.01 to 4 wt% based on the overall weight of the recyclate blend of talc.

In another preferred embodiment of the present invention the recyclate blend comprises less than 4 wt%, preferably less than 3 wt% and more preferably from 0.01 to 2 wt% based on the overall weight of the recyclate blend of chalk.

According to another preferred embodiment of the present invention the recyclate blend comprises less than 1 wt.-%, preferably less than 0.5 wt% and more preferably from 0.01 to 1 wt% based on the overall weight of the recyclate blend of paper.

Still another preferred embodiment of the present invention stipulates that the recyclate blend comprises less than 1 wt%, preferably less than 0.5 wt% and more preferably from 0.01 to 1 wt% based on the overall weight of the recyclate blend of wood.

In another preferred embodiment of the present invention the recyclate blend comprises less than 1 wt%, preferably less than 0.5 wt% and more preferably from 0.01 to 1 wt% based on the overall weight of the recyclate blend of metal.

According to the present invention, the recyclate blend has a content of limonene as determined using solid phase microextraction (HS-SPME-GC-MS) of 0.1 ppm to 100 ppm, more preferably from 1 ppm to 50 ppm, most preferably from 2 ppm to 35 ppm. Limonene is conventionally found in recycled polyolefin materials and originates from packaging applications in the field of cosmetics, detergents, shampoos and similar products. Therefore, the recyclate blend contains limonene, when the recyclate blend contains material that originates from such types of domestic waste streams.

The fatty acid content is yet another indication of the recycling origin of the recyclate blend. However, in some cases, the fatty acid content may be below the detection limit due to specific treatments in the recycling process. According to the present invention, the recyclate blend preferably has a content of fatty acids as determined using solid phase microextraction (HS-SPME-GC-MS) of from 1 ppm to 200 ppm, preferably from 1 ppm to 150 ppm, more preferably from 2 ppm to 100 ppm, most preferably from 3 ppm to 80 ppm.

In a preferred aspect, the recyclate blend (i) contains less than 5 wt%, preferably less than 1.5 wt% polystyrene; and/or (ii) contains less than 3.5 wt%, preferably less than 1 wt% talc; and/or (iii) contains less than 1.0 wt%, preferably less than 0.5 wt% polyamide.

Due to the recycling origin blend may also contain organic fillers, and/or inorganic fillers, and/or additives in amounts of up to 10 wt%, preferably 3 wt% with respect to the weight of the blend.

Thus, in an embodiment of the present polyolefin composition the blend of recycled plastic material comprises
A-1) a content of polypropylene of 50 - 99 wt%,
A-2) a content of polyethylene of 1 - 40 wt%,
A-3) 0 - 5.0 wt% of polystyrene and/or copolymers such as ABS,
A-4) 0 - 3.0 wt% stabilizers,
A-5) 0 - 4.0 wt% polyamide-6,
A-6) 0 - 3.0 wt% talc,
A-7) 0 - 3.0 wt% chalk,
A-8) 0 - 1.0 wt% paper,
A-9) 0 - 1.0 wt% wood,
A-10) 0 to 0.5 wt% metal,
A-11) 0.1 ppm - 100 ppm of limonene as determined by using solid phase microextraction (HS-SPME-GC-MS), and
A-12) 0 - 200 ppm total fatty acid content as determined by using solid phase microextraction (HS-SPME-GC-MS)
wherein all amounts are given with respect to the total weight of the recyclate blend.

As stated above the recyclate blend may include one or more further components, selected from:
A-4) up to 3.0 wt% stabilizers, preferably up to 2.0 wt% stabilizers,
A-5) up to 4.0 wt% polyamide-6, preferably up to 2.0 wt% polyamide-6,
A-6) up to 3.0 wt% talc, preferably up to 1.0 wt% talc,
A-7) up to 3.0 wt% chalk, preferably up to1.0 wt% chalk,
A-8) up to 1.0 wt% paper, preferably up to 0.5 wt% paper,
A-9) up to 1.0 wt% wood, preferably up to 0.5 wt% wood, and
A-10) up to 0.5 wt% metal, preferably up to 0.1 wt% metal,
based on the overall weight of the recyclate blend.

In one embodiment, the blend of recycled plastic material comprising polypropylene and polyethylene and has a melt flow rate MFR₂ (230°C, 2.16 kg, measured according to ISO 1133) of at least 5.0 g/10 min, preferably of at least 10.0 g/10 min, more preferably of at least 15.0 g/ 10 min, in particular in a range of 5.0 to 70.0 g/10 min, preferably of 8.0 to 60.0 g/10 min, more preferably of 10.0 to 50.0 g/10min.

According to one embodiment the recycled plastic material may have a melt flow rate MFR₂ (ISO 1133, 230°C, 2.16 kg) in the range of 15 to 50 g/10 min and preferably in the range of 18 to 36 g/10 min.

According to another embodiment the recycled plastic material may have a melt flow rate MFR₂ (ISO 1133, 230°C, 2.16 kg) in the range of 5 to 20 g/10 min and preferably in the range of 10 to 15 g/10 min.

In a further preferred embodiment of the present invention, the Charpy Notched Impact Strength measured according to ISO 179-1eA at 23°C of the recyclate blend is more than 3.0 kJ/m², preferably in the range from 4.0 to 8.0 kJ/m² and more preferably in the range from 5.0 to 6.5 kJ/m².

A further preferred embodiment of the present invention stipulates that the Tensile Modulus measured according to ISO527-2 of the recyclate blend is in the range of 800 to 1500 MPa, preferably in the range of 1100 to 1400 MPa, more preferably in the range of 1200 to 1300 MPa .

In an embodiment, the recyclate blend preferably has one or more, preferably all of the following properties:
- a melt flow rate MFR₂ (230°C, 2.16 kg, ISO1133) of 6.0 to 40 g/10min, preferably of 8.0 to 40 g/10min, more preferably of 9.0 to 36 g/10min; and/or
- a polydisperstiy index PI of 2.0 to 5.0 Pa⁻1, preferably of 2.2 to 4.5 Pa⁻¹, more preferably of 2.5 to 4.0 Pa⁻¹; and/or
- a complex viscosity at 0.05 rad/s eta_{0.05} of from 1000 kPa·s to 5000 kPa·s, preferably of from 1200 kPa·s to 4500 kPa·s, more preferably of from 1400 kPa·s to 4000 kPa·s; and/or
- a complex viscosity at 300 rad/s eta₃₀₀ of 100 kPa·s to 500 kPa·s, preferably of from 150 kPa·s to 400 kPa·s, more preferably of from 175 kPa·s to 300 kPa·s, and/or
- a density of 905 to 930 kg/m³, preferably from 910 to 925 kg/m³, more preferably from 913 to 922 kg/m³; and/or
- a limonene content as determined by using solid phase microextraction (HS-SPME-GC-MS): 0.1 ppm to 50 ppm; and/or
- a tensile modulus of from 1000 MPa to 1500 MPa, preferably from 1100 MPa to 1400 MPa; and/or
- a Charpy Notched Impact Strength at 23°C (CNIS at 23°C) of from 3.0 to 7.5 kJ/m², preferably from 4.0 to 7.0 kJ/m².

The preferred recyclate blends used in the present polyolefin composition are now described in more detail.

### Blend A1

Recyclate Blend A1 that is preferably used is available from mtm Plastics GmbH.

Blend A1 is a post-consumer recyclate polypropylene based material having a density (determined according to DIN EN ISO 1183) of 915 kg/m³, a melt flow rate (determined according to DIN EN ISO 1133, 230 °C/2.16 kg) between 20 and 22 g/10 min, %, a tensile modulus (determined according to DIN EN ISO 527, 1 mm/min) of more than 1100 MPa, a yield stress (determined according to DIN EN ISO 527, 50 mm/min) of more than 25 MPa, and a tensile strain at break (determined according to DIN EN ISO 527, 50 mm/min) of more than 13 %.

The C2 (SF) content of the soluble fraction of the recyclate blend A1, as determined by quantitative FT-IR spectroscopy calibrated by ¹³C-NMR spectroscopy, is in a range from 20 - 40 wt%, preferably 25 - 38 wt%, more preferably 26 - 35 wt%, such as 30 - 33 wt%.

The C2 (CF) content of the crystalline faction of the recyclate blend A1, as determined by quantitative FT-IR spectroscopy calibrated by ¹³C-NMR spectroscopy, is in a range from 3 - 20 wt%, preferably 5 - 15 wt%, more preferably 6 -12 wt%, such as 8 - 11 wt%.

Specifically, Blend A1 has a limonene content of below 1 mg/m3, a ratio of PP/PE of 91/6, a total C2 content 8-13 wt%, C2 (CF) content 7-12 wt%, C2 (SF) content 27-33 wt%, IV (CF) 1.52 dl/g, IV (SF) 1.94 dl/g, iV (Blend total) 1.58 dl/g, MFR₂ 21 - 22 g/ 10 min, tensile modulus 1200 - 1300 MPa, notched impact strength (charpy test 23°C) 5-6 KJ/m²;

### Blend A2

Recyclate Blend A2 that is preferably used is also available from mtm Plastics GmbH.

Blend A2 is a post-consumer recyclate polypropylene based material having a density (determined according to DIN EN ISO 1183) of 915 kg/m³, a melt flow rate (determined according to DIN EN ISO 1133, 230 °C/2.16 kg) of 11-13 g/10 min, a tensile modulus (determined according to DIN EN ISO 527, 1 mm/min) of more than 1100 MPa, a yield stress (determined according to DIN EN ISO 527, 50 mm/min) of more than 28 MPa, and a tensile strain at break (determined according to DIN EN ISO 527, 50 mm/min) of more than 47 %.

The C2 (SF) content of the soluble fraction of the recyclate blend A2, as determined by quantitative FT-IR spectroscopy calibrated by ¹³C-NMR spectroscopy, is in a range from 25 - 45 wt%, preferably 27 - 40 wt%, more preferably 28 - 36 wt%.

The C2 (CF) content of the crystalline faction of the recyclate blend A2, as determined by quantitative FT-IR spectroscopy calibrated by ¹³C-NMR spectroscopy, is in a range from 4 - 20 wt%, preferably 5 - 16 wt%, more preferably 8 - 14 wt%.

Specifically, Blend A2 has limonene content of below 1 mg/m³, a ratio of PP/PE of 92/8, a total C2 content 8-15 wt%, C2 (CF) content 8-14 wt%, C2 (SF) content 28-36 wt%, IV (CF) 1.71 dl/g, IV (SF) 1.26 dl/g, iV (Blend total) 1.71 dl/g%, MFR₂ 11 - 13 g/ 10 min, tensile modulus 1200 - 1300 MPa, notched impact strength (charpy test 23°C) 5-6 KJ/m²;

### Elastomer

As mentioned above, the polyolefin composition according to the invention comprises at least one C2/C4 and/or C2/C8 elastomer as compatibilizer,

The C2/C4 plastomer is a plastomeric copolymer, i.e. having elastomeric properties and plastics properties, containing ethylene monomers and butene comonomers. The C2C8 plastomer is a plastomeric copolymer, i.e. having elastomeric properties and plastics properties, containing ethylene monomers and 1-octene comonomers.

It is thereby preferred that the butene comonomer or the 1-octene comonomer is incorporated into the C2/C4 plastomer or C2C8 plastomer in random form so that the C2/C4 or C2C8 plastomer is a random copolymer of ethylene and butene or ethylene and 1-octene.

A random copolymer differentiates from a block copolymer, which has ethylene rich blocks and commoner rich blocks (butene or 1-octene rich blocks) in the polymer chain.

The elastomer preferably is a virgin polymer, which is compounded to the other components in the polypropylene-polyethylene composition of the present invention. Residual C2/C4 or C2C8 plastomer, which may be present in the mixed-plastic blend (A) is not subsumed under compatibilizer (B).

In an embodiment, the at least one C2/C4 and/or C2/C8 elastomer has an MFR₂ (ISO1133, 2.16 kg load at 190 °C) of equal or below 20 g/10 min; preferably of equal or below 10 g/10 min; more preferably of equal or below 5 g/10 min, such as in the range from 0.1 to 30.0 g/10 min, preferably from 0.2 to 20.0 g/10 min, more preferably from 0.3 to 10.0 g/10 min.

In a further embodiment, the at least one C2/C4 and/or C2/C8 elastomer has a density (ISO1183) of equal or lower than 900 kg/m³, preferably equal or lower than 890 kg/m³, more preferably equal or lower than 880 kg/m³, even more preferably equal or lower than 870 kg/m³, still more preferably equal or lower than 860 kg/m³, such as in a range between 500 and 900 kg/m³, in particular in a range between 660 and 890 kg/m³, mor particular in a range between 700 and 880 kg/m³.

More specifically, the C2/C4 plastomer has a melt flow rate (MFR₂), determined according to ISO 1133 at 190 °C and 2.16 kg, in the range from 0.1 to 10.0 g/10 min, preferably from 0.2 to 8.0 g/10 min, more preferably from 0.3 to 5.0 g/10 min.

Further, the C2/C4 plastomer has a density of from 800 to 900 kg/m³, preferably from 850 to 890 kg/m³, more preferably from 860 to 880 kg/m³, determined according to ISO 1183.

Furthermore, the C2/C4 plastomer preferably has a glass transition temperature Tg of -30 to - 70°C, preferably -40 to -60°C, more preferably -50 to -60°C, determined by DSC according to ISO 11357.

The C2/C8 plastomer has a melt flow rate (MFR₂), determined according to ISO 1133 at 190 °C and 2.16 kg, in the range from 0.1 to 15.0 g/10 min, preferably from 0.2 to 12.0 g/10 min, more preferably from 0.3 to 10.0 g/10 min.

Further, the C2/C8 plastomer has a density of from 860 to 885 kg/m³, preferably from 862 to 884 kg/m³, more preferably from 865 to 883 kg/m³, determined according to ISO 1183.

Still further, the C2/C8 plastomer has a melting temperature Tm of below 85 °C, preferably from 40 to 74 °C, more preferably from 45 to 73 °C determined by DSC according to ISO 11357.

Furthermore, the C2/C8 plastomer preferably has a glass transition temperature Tg of -40 to -75°C, preferably -45 to -70°C, more preferably -50 to -65°C, determined by DSC according to ISO 11357.

C2/C4 and C2C8 plastomers are usually polymerized in the presence of a metallocene catalyst in solution polymerization. Suitable metallocene catalysts and polymerization conditions suitable for the production of the C2C8 plastomer are well established in the art.

C2/C4 or C2C8 plastomers suitable as compatibilizer (B) can also be commercially available e.g. from Borealis AG under the tradename Queo^{®}, from DOW Chemical Corp (USA) under the tradename Engage^{®}, or from Exxon Mobil (USA) under the tradename Exact^{®}.

### Polypropylene virgin Homopolymers

As described previously, the present polyolefin composition comprises 4 to 8 wt%, more preferably 5 to 6 wt% (based on the overall weight of the polyolefin composition) of polypropylene homopolymer with MFR₂ (ISO1133, 2.16 kg load at 230 °C) of at least 800 g/10 min.

In an embodiment, the at least one polypropylene homopolymer has a MFR₂ (ISO1133, 2.16 kg load at 230 °C) of at least 1000 g/10 min, preferably of at least 1200 g/10min.

The polypropylene homopolymer used as virgin polymer in the present polyolefin composition may be at least one polypropylene homopolymer (PPH-1 ) having a melt flow rate MFR₂ (230°C, 2.16 kg, measured according to ISO 1133) in the range of 1000 to 1500 g/10min, preferably of 1100 to 1300 g/10min, more preferably of 1200 to 1250 g/10 min;

The polypropylene homopolymer (PPH-1) has a melting temperature (according to ISO 11357-3) of at least 140°C; preferably of at least 150°C, preferably in the range of 150 to 160°C, like 158°C, and a density (according to ISO 1183-1) of at least 700 kg/m3, preferably at least 800 kg/m3, preferably in a range between 700 and 1200 kg/m3, more preferably in a range between 800 and 1000 kg/m3, such as between 850 and 950 kg/m3.

It is to be understood that the present polyolefin composition may comprise not only one, but two or more polypropylene virgin homopolymers with different melt flow rates. This allows for an adjustment of the melt flow rate of the final polyolefin composition.

### Additives

As mentioned previously, the present polyolefin composition may comprise additives.

Generally, the amount of these additives is in the range of 0 to 5.0 wt%, preferably in the range of 0.01 to 3.0 wt%, more preferably from 0.01 to 2.0 wt% based on the weight of the total composition.

Examples of additives for use in the composition are pigments or dyes (for example carbon black), stabilizers (anti-oxidant agents), anti-acids and/or anti-UVs, antistatic agents, nucleating agents and utilization agents (such as processing aid agents). Preferred additives are carbon black, at least one antioxidant and/or at least one UV stabilizer.

Examples of antioxidants which are commonly used in the art, are sterically hindered phenols (such as CAS No. 6683-19-8, also sold as Irganox 1010 FF^{™} by BASF), phosphorous based antioxidants (such as CAS No. 31570-04-4, also sold as Hostanox PAR 24 (FF)^{™} by Clariant, or Irgafos 168 (FF)TM by BASF), sulphur based antioxidants (such as CAS No. 693- 36-7, sold as Irganox PS-802 FL^{™} by BASF), nitrogen-based antioxidants (such as 4,4'- bis(1,1'-dimethylbenzyl)diphenylamine), or antioxidant blends. Preferred antioxidants may be Tris (2,4-di-t-butylphenyl) phosphite and/or Octadecyl 3-(3',5'-di-tert. butyl-4-hydroxyphenyl)propionate.

Anti-acids are also commonly known in the art. Examples are calcium stearates, sodium stearates, zinc stearates, magnesium and zinc oxides, synthetic hydrotalcite (e.g. SHT, CAS-No. 11097-59-9), lactates and lactylates, as well as calcium stearate (CAS No. 1592-23-0) and zinc stearate (CAS No. 557-05-1).

Common antiblocking agents are natural silica such as diatomaceous earth (such as CAS No. 60676-86-0 (SuperfFloss^{™}), CAS-No. 60676-86-0 (SuperFloss E^{™}), or CAS-No. 60676-86-0 (Celite 499^{™})), synthetic silica (such as CAS-No. 7631-86-9, CAS-No. 7631-86-9, CAS-No. 7631-86-9, CAS-No. 7631-86-9, CAS-No. 7631-86-9, CAS-No. 7631-86-9, CAS-No. 112926-00-8, CAS-No. 7631-86-9, or CAS-No. 7631-86-9), silicates (such as aluminium silicate (Kaolin) CAS-no. 1318-74-7, sodium aluminum silicate CAS-No. 1344-00-9, calcined kaolin CAS-No. 92704-41-1, aluminum silicate CAS-No. 1327-36-2, or calcium silicate CAS-No. 1344-95-2), synthetic zeolites (such as sodium calcium aluminosilicate hydrate CAS-No. 1344-01-0, CAS-No. 1344-01-0, or sodium calcium aluminosilicate, hydrate CAS-No. 1344-01-0).

Anti-UVs are, for example, Bis-(2,2,6,6-tetramethyl-4-piperidyl)-sebacate (CAS -No. 52829-07-9, Tinuvin 770); 2-hydroxy-4-n-octoxy-benzophenone (CAS-No. 1843-05-6, Chimassorb 81). Preferred UV stabilizers may be low and/or high molecular weight UV stabilizers such as n-Hexadecyl- 3,5-di-t-butyl-4-hydroxybenzoate, a mixture of esters of 2,2,6,6-tetramethyl-4-piperidinol and higher fatty acids (mainly stearic acid) and/or Poly((6-morpholino-s-triazine-2,4-diyl)(1,2,2,6,6-pentamethyl-4-piperidyl)imino)hexameth-ylene (1,2,2,6,6-pentamethyl-4-piperidyl)imino)).

Alpha nucleating agents like sodium benzoate (CAS No. 532-32-1); 1,3:2,4-bis(3,4-dimethylbenzylidene)sorbitol (CAS 135861-56-2, Millad 3988).

Suitable antistatic agents are, for example, glycerol esters (CAS No. 97593-29-8) or ethoxylated amines (CAS No. 71786-60-2 or 61791-31-9) or ethoxylated amides (CAS No. 204-393-1).

Usually these additives are added in quantities of 100-2.000 ppm for each individual component of the polymer.

It is appreciated that the polyolefin compositions as defined herein may be obtained in a process comprising the steps of
- providing a mixture of a) 60 to 85 wt% (based on the overall weight of the polyolefin composition) of a blend of plastic material comprising polypropylene and polyethylene in a ratio between 14:6 and 49:1, b) 10 to 30 wt% (based on the overall weight of the polyolefin composition) of at least one C2/C4 and/or C2/C8 elastomer as compatibilizer having an MFR₂ (ISO1133, 2.16 kg load at 190 °C) of equal or below 30 g/ min, c) 3 to 10 wt% (based on the overall weight of the polyolefin composition) of polypropylene homopolymer with MFR₂ (ISO1133, 2.16 kg load at 230 °C) of at least 1000 g/10 min, and d) optionally further additives, wherein the sum of all ingredients always adds up to 100 wt%,
- melting the mixture in an extruder, and
- optionally pelletizing the obtained polyolefin composition.

The present invention is also directed to an article comprising the polyolefin composition according to the invention.

The polyolefin composition according to the invention can be used for a wide range of applications, for example for manufacturing structural products, pumps, fans, appliances, automotive parts, pipes and fittings, packaging, caps and closures, in particular household appliances.

### Experimental Section

The following Examples are included to demonstrate certain aspects and embodiments of the invention as described in the claims. It should be appreciated by those of skill in the art, however, that the following description is illustrative only and should not be taken in any way as a restriction of the invention.

### Test Methods

The following definitions of terms and determination methods apply for the above general description of the invention as well as to the below examples unless otherwise defined.

### Determination of Crystalline and soluble fractions and their respective properties (IV and Ethylene content) via Crystex

The crystalline (CF) and soluble fractions (SF) of the polypropylene (PP) compositions as well as the comonomer content and intrinsic viscosities of the respective fractions were analyzed by use of the Crystex (crystallisation extraction) method. Potential instruments that can be used are Crystex QC or Crystex 42 (Polymer Char; Valencia, Spain). Details of the technique and the method can be found in literature (Ljiljana Jeremic, Andreas Albrecht, Martina Sandholzer & Markus Gahleitner (2020): Rapid characterization of high-impact ethylene-propylene copolymer composition by crystallization extraction separation: comparability to standard separation methods, International Journal of Polymer Analysis and Characterization, 25:8, 581-596)

The crystalline and amorphous fractions are separated through temperature cycles of dissolution at 160°C, crystallization at 40°C and re-dissolution in 1,2,4-trichlorobenzene at 160°C. Quantification of SF and CF and determination of ethylene content (C2) are achieved by means of an integrated infrared detector (IR4) and for the determination of the intrinsic viscosity (IV) an online 2-capillary viscometer is used.

IR4 detector is a multiple wavelength detector measuring IR absorbance at two different bands (CH3 stretching vibration (centred at app. 2960 cm⁻¹) and the CH stretching vibration (2700-3000 cm⁻¹) that are serving for the determination of the concentration and the Ethylene content in Ethylene-Propylene copolymers. IR4 detector is calibrated with series of 8 EP copolymers with known Ethylene content in the range of 2 wt.-% to 69 wt.-% (determined by 13C-NMR) and each at various concentrations, in the range of 2 and 13mg/ml. To encounter for both features, concentration and ethylene content at the same time for various polymer concentration expected during Crystex analyses the following calibration equations were applied: 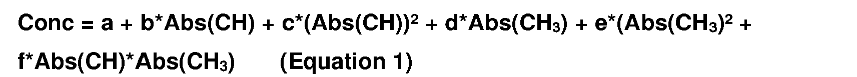 Conc = a + b*Abs(CH) + c*(Abs(CH))2 + d*Abs(CH3) + e*(Abs(CH3)2 + f*Abs(CH)*Abs(CH3) (Equation 1) 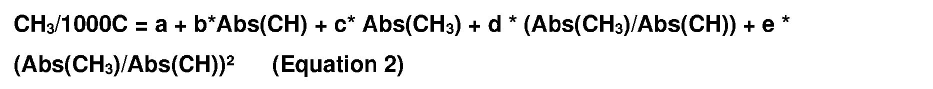 CH3/1000C = a + b*Abs(CH) + c* Abs(CH3) + d * (Abs(CH3)/Abs(CH)) + e * (Abs(CH3)/Abs(CH))2 (Equation 2)

The constants a to f for equation 1 and a to e for equation 2 were determined by using least square regression analysis.

The CH₃/1000C is converted to the ethylene content in wt.-% using following relationship: $Wt . - % \left(Ethylene in EP Copolymers\right) = 100 - {CH}_{3} / 1000 TC * 0.3$ (Equation 3)

Amount of Soluble fraction (SF) and Crystalline Fraction (CF) are correlated through the XS calibration to the "Xylene Cold Soluble" (XCS) quantity and respectively Xylene Cold Insoluble (XCI) fractions, determined according to standard gravimetric method as per ISO16152. XS calibration is achieved by testing various EP copolymers with XS content in the range 2-31 Wt%. A linear calibration curve is used.

Intrinsic viscosity (IV) of the parent EP copolymer and its soluble and crystalline fractions are determined with a use of an online 2-capillary viscometer and are correlated to corresponding IV's determined by standard method in decalin according to ISO 1628-3. Calibration is achieved with various EP copolymers and PP polymers with IV = 2-4 dL/g. The determined calibration curve is linear.

The samples to be analyzed are weighed out in concentrations of 10 mg/ml to 20mg/ml. After automated filling of the vial with 1,2,4-TCB containing 250 mg/l 2,6-tert-butyl-4-methylphenol (BHT) as antioxidant, the sample is dissolved at 170°C until complete dissolution is achieved with either constant stirring or gentle shaking. To avoid sample degradation, polymer solution is blanketed with the N2 atmosphere during dissolution.

For PP composition containing inorganic fillers or pigments or any other non-TCB soluble polymeric substances removal of these is required. This can be done by hot filtration prior injection.

A defined volume of the polymer solution is injected into the column filled with inert support where the crystallization of the sample and separation of the soluble fraction from the crystalline fraction is taking place. This process is repeated two times. During the first injection the whole sample is measured at high temperature, determining the IV[dl/g] and the C2[wt%] of the PP composition. During the second injection the soluble fraction (at low temperature) and the crystalline fraction (at high temperature) with the crystallization cycle are measured (Wt% SF, Wt% C2, IV).

### Determination of the content of isotactic polypropylene (iPP), polystyrene (PS), ethylene and Polyamide-6 in blend A)

Calibration standards were prepared by blending iPP and HDPE to create a calibration curve. The thickness of the films of the calibration standards were 300 µm. For the quantification of the iPP, PS and PA 6 content in the samples quantitative IR spectra were recorded in the solid-state using a Bruker Vertex 70 FTIR spectrometer. Spectra were recorded on 25x25 mm square films of 50-100 µm thickness prepared by compression moulding at 190ºC and 4 to 6 mPa. Standard transmission FTIR spectroscopy was employed using a spectral range of 4000 to 400 cm⁻¹, an aperture of 6 mm, a spectral resolution of 2 cm⁻¹, 16 background scans, 16 spectrum scans, an interferogram zero filling factor of 32 and Norton Beer strong apodisation.

The absorption of the band at 1167 cm⁻¹ in iPP was measured and the iPP content was quantified according to a calibration curve (absorption/thickness in cm versus iPP content in wt.-%).

The absorption of the band at 1601 cm⁻¹ (PS) and 3300 cm⁻¹ (PA6) were measured and the PS- and PA6 content quantified according to the calibration curve (absorption/thickness in cm versus PS and PA content in wt.-%). The content of ethylene was obtained by subtracting the content of iPP, PS and PA6 from 100. The analysis was performed as double determination.

### Intrinsic viscosity

The intrinsic viscosity (iV) is measured according to DIN ISO 1628/1, October 1999, in Decalin at 135 °C.

### Melt Flow Rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR₂ of polypropylene is determined at a temperature of 230 °C and a load of 2.16 kg.

### Density:

The density is measured according to ISO 1183-187. Sample preparation is done by compression moulding in accordance with ISO 1872-2:2007.

**The xylene soluble fraction at room temperature (XCS, wt.-%):** The amount of the polymer soluble in xylene is determined at 25 °C according to ISO 16152; 5^{th} edition; 2005-07-01.

**DSC analysis, melting temperature (Tₘ) and heat of fusion (H_{f}), crystallization temperature (T_{c}) and heat of crystallization (H_{c}):** measured with a TA Instrument Q200 differential scanning calorimetry (DSC) on 5 to 7 mg samples. DSC is run according to ISO 11357 / part 3 /method C2 in a heat / cool / heat cycle with a scan rate of 10 °C/min in the temperature range of -30 to +225 °C. Crystallization temperature (T_{c}) and crystallization enthalpy (H_{c}) are determined from the cooling step, while melting temperature (Tₘ) and melting enthalpy (Hₘ) are determined from the second heating step.

**The Flexural Modulus** is determined according to ISO 178 method A (3-point bending test) on 80 mm × 10 mm × 4 mm specimens. Following the standard, a test speed of 2 mm/min and a span length of 16 times the thickness was used. The testing temperature was 23±2 ° C. Injection moulding was carried out according to ISO 19069-2 using a melt temperature of 230 °C for all materials irrespective of material melt flow rate.

### Notched impact strength (NIS)

The Charpy notched impact strength (NIS) is measured according to ISO 179 1eA at +23 °C or -20 °C, using injection moulded bar test specimens of 80×10×4 mm³ prepared in accordance with ISO 19069-2 using a melt temperature of 230 °C for all materials irrespective of material melt flow rate.

### Inorganic residues

Inorganic residues are quantified according to DIN ISO 1172:1996 using a Perkin Elmer TGA 8000. Approximately 10-20 mg of material was placed in a platinum pan. The temperature was equilibrated at 50 °C for 10 minutes, and afterwards raised to 950 °C under nitrogen at a heating rate of 20 °C/min. The ash content was evaluated as the weight % at 850 °C.

### Limonene detection

The determination of limonene is based on a static headspace (HS) approach. This analysis uses a combination of a HS sampler with a gas chromatograph (GC) and a mass spectrometer (MS) for screening purposes.

Samples were delivered to the lab in sealed aluminum-coated polyethylene (PE) bags. Prior to the analysis, samples were cryo-milled, a portion of 2.000 ± 0.100 g was weighed in a 20 ml HS vial and tightly closed. For every sample, a double determination was performed.

### HS/GC/MS parameters

• HS parameters (Agilent G1888 Headspace Sampler)

| | |
|---|---|
| Vial equilibration time: | 120 min (sample), 5 min (standard) |
| Oven temperature: | 100 °C (sample), 200 °C (standard) |
| Loop temperature: | 110 °C (sample), 205 °C (standard) |
| Transfer line temperature: | 120 °C (sample), 210 °C (standard) |
| Low shaking | |

• GC parameters (Agilent 7890A GC System)

| | |
|---|---|
| Column: | ZB-WAX 7HG-G007-22 (30 m x 250 µm x 1 µm) |
| Carrier gas: | Helium 5.0 |
| Flow: | 2 ml/min |
| Split: | 5:1 |
| GC oven program: | 35 °C for 0.1 min |
| 10 °C/min until 250 °C | |
| 250 °C for 1 min | |

• MS parameters (Agilent 5975C inert XL MSD)

| | | |
|---|---|---|
| Acquisition mode: | | Scan |
| Scan parameters: | | |
| | Low mass: | 20 |
| | High mass: | 200 |
| | Threshold: | 10 |

• Software/Data evaluation
MSD ChemStation E.02.02.1431
MassHunter GC/MS Acquisition B.07.05.2479
AMDIS GC/MS Analysis Version 2.71
NIST/EPA/NIH Mass Spectral Library (2011 version)
NIST Mass Spectral Search Program Version 2.0 g

• AMDIS deconvolution parameters

| | |
|---|---|
| Minimum match factor: | 80 |
| Threshold: | Low |
| Scan direction: | High to Low |
| Data file format: | Agilent files |
| Instrument type: | Quadrupole |
| Component width: | 20 |
| Adjacent peak subtraction: | Two |
| Resolution: | High |
| Sensitivity: | Very high |
| Shape requirements: | Medium |
| Solvent tailing: | 91 m/z |
| Column bleed: | 207 m/z |
| Min. model peaks: | 2 |
| Min. S/N: | 10 |
| Min. certain peaks: | 0.5 |

• MSD ChemStation integration parameters

| | |
|---|---|
| Integrator: | ChemStation |
| Initial area reject: | 0 |
| Initial peak width: | 0.005 |
| Shoulder detection: | off |
| Initial threshold: | 10.5 |

In this study, the statement "below the limit of detection (< LOD)" describes a condition where either the match factor is below 80 (AMDIS) or the signal to noise ratio (Pk-pk S/N = Corrected signal/Pk-pk noise, MSD ChemStation signal to noise report) of the peak in the sample run is below 3. The results refer solely to the measured samples, time of measurement and the applied parameters.

### Standard solutions

For a positive identification and comparison with the (lowest) odour detection thresholds (ODT), a limonene standard was used.

For the HS/GC/MS analysis, 5 µl of the respective standard was injected in a 20 ml HS vial, tightly closed and measured.

Assuming full vaporisation of the standard substance, the concentration limonene in the HS *c_{G}* was estimated as listed in the following Table 1.

**Table 1: Calibration standard and ODT**

| **Analyte** | **Solvent** | ***c_{G}* / mg m⁻³** | **Target ion (m/z)** | **(lowest) ODT** / **mg m⁻³ [1]** |
|---|---|---|---|---|
| Limonene | 2-Butanol | 75 | 68 | 0.21 |

### Data evaluation

The concentration of an analyte in the HS *c_{G}* is calculated by considering the substance amount *m_{G}* and the available HS volume *V_{G}* (Equation 1). ${c}_{G}^{Standard} \left[mg/{m}^{3}\right] = \frac{{m}_{G}^{Standard}}{{V}_{G}^{Standard}}$ Equation 1

To estimate the concentration of an analyte in the HS above a polymer sample, the response factor, *Rf* of a one-point calibration is required (Equation 2). By integrating the extracted ion chromatogram (EIC), the peak area is obtained for the analyte. The corresponding target ion is listed in Table 1. $Rf = \frac{{c}_{G}^{Standard}}{Peak {area}^{Standard}}$ Equation 2

The concentration of an analyte in the HS above a polymer sample, ${c}_{G}^{Sample}$ is calculated by multiplying the response factor with the EIC peak area of the sample (Equation 3). ${c}_{G}^{Sample} \left[mg/{m}^{3}\right] = Rf ∗ Peak {area}^{Sample}$ Equation 3

Additionally, the odour relevance of an analyte in the HS above a polymer sample is estimated by the odour activity value (OAV). Therefore, the concentration of an analyte in the HS above a polymer sample ${c}_{G}^{Sample}$ is compared with the (lowest) odour detection threshold (ODT) found in literature (Equation 4) [Van Gemert L. J., Odour Thresholds: Compilations of odour threshold values in air, water and other media, Utrecht, Oliemans Punter & Partners BV, 2011]. A value above 1 indicates the relevance of an analyte to the odour at the given HS temperature. $OAV = \frac{{c}_{G}^{Sample} \left[mg/{m}^{3}\right]}{ODT \left[mg/{m}^{3}\right]}$ Equation 4

### Considerations and limitations

It must be considered that the ODT for some substances is below the detection limit (LOD) of the method. Therefore, components below the LOD might be missed although still relevant to the overall odour.

The OAV is based on the assumption that the HS parameters are somewhat relatable to the measurement conditions of an ODT determination. Of course, this is not fully applicable because temperature settings of 100 °C are not necessarily chosen for such experiments and have therefore limited practical value. Nevertheless, this approach can at least indicate the odour relevance of the defined marker substances.

### The tensile properties acc ISO 527-2 (uniaxial tensile test)

The tensile properties (tensile modulus, tensile strength, tensile stain at strength, tensile stress at break, tensile strain at break) were determined acc. ISO 527-2 method B on 1A ISO 527-2 or 1B ISO 527-2 dogbones. Following the standard, a testspeed of 1mm/min was used for tensile modulus and 50mm/min for all other properties. The testing temperature was 23±2° C. Injection or compression moulding was carried out according to ISO 19069-2 (for PP).

### Instrumented Puncture of rigid plastics (ISO 6603- Part 2)

Maximum force, deflection at maximum force, energy to maximum force, puncture deflection and puncture energy were determined in the instrumented puncture impact behaviour test according to ISO 6603-2. The specimens were injection moulded plaques according to (ISO 19069-2 for PP) and cut to dimensions of 60 mm × 60 mm × 2 mm. The testing conditions used were: impact velocity of 4.4 m/s, with 20 mm diameter lubricated striker, at 23±2°C. The specimens were clamped with a support ring of 40 mm diameter.

Different blends of recycled material may be used. The blend used in the examples is characterized by the following properties:

### Blend A1

Blend A1 of recycled plastic material was used ( having a density (determined according to DIN EN ISO 1183) of 915 kg/m³, a melt flow rate (determined according to DIN EN ISO 1133, 230 °C/2.16 kg) of 21-22 g/10 min, a tensile modulus (determined according to DIN EN ISO 527, 1 mm/min) of 1200 - 1300 MPa, an impact strength (charpy test 23°C) 5-6 KJ/m², a yield stress (determined according to DIN EN ISO 527, 50 mm/min) of more than 25 MPa, and a tensile strain at break (determined according to DIN EN ISO 527, 50 mm/min) of more than 13 %.

Specifically, Blend A1 has a limonene content of below 1 mg/m3, a ratio of PP/PE of 91/6, a total C2 content 8-13 wt%, C2 (CF) content 7-12 wt%, C2 (SF) content 27-33 wt%, IV (CF) 1.52 dl/g, IV (SF) .94 dl/g, iV (Blend total) 1.58 dl/g, MFR₂ 21 - 22 g/ 10 min, tensile modulus 1200 - 1300 MPa, notched impact strength (charpy test 23°C) 5-6 KJ/m²

As plastomer P for use as a compatibilizer the following commercially available ethylene-co-1-octene polymers (C2C8 plastomers) or ethylene-co-1-butene (C2C4) were used:

| | |
|---|---|
| P-1 | An ethylene-co-butene polymer having a density of 860 kg/m³, and a melt flow rate MFR₂ (190°C, ISO1133) of < 0.5 g/10 min commercially available |
| P-2 | An ethylene-co-1-octene polymer having a density of 860 kg/m³, and a melt flow rate MFR₂ (190°C, ISO1133) of 1.0 g/10 min commercially available |
| P-3 | An ethylene-co-1-octene polymer having a density of 868 kg/m³, a melt flow rate MFR₂ (190°C, ISO1133) of 0.5 g/10 min and a melt temperature Tm of 47°C, commercially available |
| P-4 | An ethylene-co-1-octene polymer having a density of 883 kg/m³, a melt flow rate MFR₂ (190°C, ISO1133) of 30 g/10 min commercially available |

The polypropylene homopolymer (PPH-1 ) used as virgin polymer in the present polyolefin composition has a melt flow rate MFR₂ (230°C, 2.16 kg, measured according to ISO 1133) of 1050 to 1350 g/10 min; a melting temperature (according to ISO 11357-3) between 155 and 160°C, and a density (according to ISO 1183-1) between 850 and 950 kg/m³

The following additives were used: Antioxidants: AO1 (AO200GRA), AO2 (AO102GRA); Dosing agent: HC001A-B1 (polypropylene homopolymer)

Table 2 refers to polyolefin compositions comprising:
- Comparative Example (CE1): blend of recycled material (Blend A1) and 20 wt% Plastomer P-4;
- Comparative Example (CE2): blend of recycled material (Blend A1) and 20 wt% Plastomer P-1;
- Comparative Example (CE3): blend of recycled material (Blend A1) and 20 wt% Plastomer P-3;
- Inventive Example (IE1): blend of recycled material (Blend A1), 22 wt% Plastomer P-2 and 5 wt% Polypropylene Homopolymer PPH-1;
- Inventive Example (IE2): blend of recycled material (Blend A1), 22 wt% Plastomer P-1 and 5 wt% Polypropylene Homopolymer PPH-1;
- Inventive Example (IE3): blend of recycled material (Blend A1), 22 wt% Plastomer P-1 and 5 wt% Polypropylene Homopolymer PPH-1.

**Table 2**

| | CE1 | CE2 | CE3 | IE1 | IE2 | IE3 |
|---|---|---|---|---|---|---|
| Blend A1 | 76,80 | 76,80 | 76,80 | 69,80 | 69,80 | 69,8 |
| P-1 | | 20 | | | | |
| P-1 | | | | | 22 | 22 |
| P-2 | | | | 22 | | |
| P- 4 | 20 | | | | | |
| P-3 | | | 20 | | | |
| PPH-1 | | | | 5 | 5 | 5 |
| HC001A-B1 | 2.93 | 2.93 | 2.93 | 2.93 | 2.93 | 2.93 |
| AO1 | 0.07 | 0.07 | 0.07 | 0.07 | 0.07 | 0.07 |
| AO2 | 0.20 | 0.20 | 0.20 | 0.20 | 0.2 | 0.2 |
| | | | | | | |
| SF (soluble fraction), wt% | 28 | 29 | 28 | 29 | | |
| IV(SF), dl/g | 1,14 | 2,17 | 1,71 | 1,86 | | |
| IV(CF), dl/g | 1,60 | 1,61 | 1,61 | 1,59 | | |
| MFR, g/10min | 22 | 15 | 13 | 17 | 17.7 | 17.7 |
| Flexural Modulus, MPa | | | | | 840 | 834 |
| Tensile Modulus, MPa | 994 | 922 | 838 | 855 | 876 | 871 |
| Tensile strength, MPa | 21 | 19 | 18 | 17 | 17.2 | 16.8 |
| Tensile break, % | 454 | 52 | 56 | 362 | 109.5 | 92.8 |
| Charpy NIS +23°C, kJ/m² | 8,2 | 27 | 44 | 46 | 42.2 | 52.4 |
| Charpy NIS -20°C, kJ/m² | 2,7 | | | 6,66 | 7.6 | 9.3 |
| Tensile/Charpy ratip | | | | | | |
| Instrumented puncture test, 3 mm | | | | | | |
| Rupture profile +23°C | 6YS | nm | nm | 6YD | 6YD | 6YD |
| Energy to max +23°C, J | 20 | nm | nm | 19 | 18.6 | 17.8 |
| Puncture energy +23°C, J | 35 | nm | nm | 35 | 33 | 32.5 |
| | | | | | | |
| Rupture profile -20°C | 6NY | nm | nm | 5YU; 1NY | 5YU; 1NY | 5YS |
| Energy to max -20°C, J | 10 | nm | nm | 27 | 27.4 | 27.6 |
| Puncture energy -20°C, J | 11 | nm | nm | 41 | 36 | 48.8 |

As can be seen in Table 2, the inventive compositions show excellent combination of properties where the MFR > 15 g/10min, tensile strength > 10 MPa, tensile break > 200 % and finally Charpy at +23 higher than 40 kJ/m².

In particular, the balance impact stiffness and impact strength (ratio between Charpy/Modulus, Charpy/Strength, Puncture/Modulus, and Puncture/Strength) is superior for all the IE 1-3.

Specifically, the puncture energy measured at -20°C on any of IE1-IE3 is higher than for CE1. The Charpy NIS at +23 °C is measured for any of IE1 and IE2 is higher than any of CE1-CE3.

## Claims

1. Polyolefin composition comprising
a) 60 to 85 wt% (based on the overall weight of the polyolefin composition) of a blend of recycled plastic material comprising polypropylene and polyethylene in a ratio between 14:6 and 49.5:1,
b) 10 to 30 wt% (based on the overall weight of the polyolefin composition) of at least one C2/C4 and/or C2/C8 elastomer as compatibilizer having an MFR₂ (ISO1133, 2.16 kg load at 190 °C) of equal or below 30 g/ min,
c) 3 to 10 wt% (based on the overall weight of the polyolefin composition) of polypropylene homopolymer with MFR₂ (ISO1133, 2.16 kg load at 230 °C) of at least 800 g/10 min, and
d) optionally further additives, wherein the sum of all ingredients always adds up to 100 wt%,
wherein the polyolefin composition is **characterized by**
- an impact strength (ISO179-1, Charpy 1eA +23°C) of at least 30 kJ/m²,
- a melt flow rate MFR₂ (230°C, 2.16 kg, measured according to ISO 1133) of at least 15 g/10 min, and
- a tensile break (ISO 527-2) of at least 80%.

2. Polyolefin composition according to claim 1, **characterized in that** it comprises
a) 63 to 80 wt%, preferably 65 to 75 wt% (based on the overall weight of the polyolefin composition) of a blend of recycled plastic material comprising polypropylene and polyethylene in a ratio between 14:6 and 49.5:1,
b) 15 to 25 wt%, preferably 18 to 23 wt% (based on the overall weight of the polyolefin composition) of at least one C2/C4 and/or C2/C8 elastomer as compatibilizer having an MFR₂ (ISO1133, 2.16 kg load at 190 °C) of equal or below 30 g/ min,
c) 4 to 9 wt%, more preferably 5 to 7 wt% (based on the overall weight of the polyolefin composition) of polypropylene homopolymer with MFR₂ (ISO1133, 2.16 kg load at 230 °C) of at least 800 g/10 min, and
d) optionally further additives, wherein the sum of all ingredients always adds up to 100 wt%.

3. Polyolefin composition according to one of the preceding claims, **characterized by** an impact strength (ISO179-1, Charpy 1eA +23°C) of at least 35.0 kJ/m², preferably of at least 40.0 kJ/m², in particular in a range between 30.0 and 60.0 kJ/m², more in particular in a range between 35.0 and 55.0 kJ/m², even more particular in a range between 40.0 and 55.0 kJ/m².

4. Polyolefin composition according to one of the preceding claims, **characterized by** a melt flow rate MFR₂ (ISO 1133, 2.16 kg, 230°C) of at least 16.0 g/ 10 min, preferably at least 17.5 g/10 min, more preferably at least 17.5 g/10 min, in particular in a range between 15.0 and 30.0 g/10 min, preferably between 16.0 and 25.0 g/10min, more preferably between 17.0 and 20.0 g/10 min.

5. Polyolefin composition according to one of the preceding claims **characterized by** a tensile break (ISO 527-2) of at least 90%, more preferably of at least 100%, even more preferably of at least 150%, still more preferably of at least 200 %, in particular in a range between 80% and 400%, preferably between 90% and 300%, more preferably between 100% and 250%.

6. Polyolefin composition according to one of the preceding claims **characterized by** a tensile modulus (ISO 527-2) of at least 800 MPa, preferably of at least 850 MPa, more preferably of at least 870 MPa, in particular in a range between 800 and 1500 MPa, more in particular in a range between 850 and 1000 MPa.

7. Polyolefin composition according to one of the preceding claims **characterized in that** the blend of plastic material comprising polypropylene and polyethylene is a blend of recycled plastic material comprising polypropylene and polyethylene in a ratio between 14:6 and 49.5:1, which is recovered from a waste plastic material derived from post-consumer and/or post-industrial waste.

8. Polyolefin composition according to one of the preceding claims, **characterized in that** the blend of recycled plastic material comprising polypropylene and polyethylene has a melt flow rate MFR₂ (230°C, 2.16 kg, measured according to ISO 1133) of at least 5.0 g/10 min, preferably of at least 10.0 g/10 min, more preferably of at least 15.0 g/ 10 min, in particular in a range of 5.0 to 70.0 g/10 min, preferably of 8.0 to 60.0 g/10 min, more preferably of 10.0 to 50.0 g/10min.

9. Polyolefin composition according to one of the preceding claims **characterized in that** the blend of recycled plastic material shows the following properties in the CRYSTEX analysis (as described in the experimental section):
∘ a crystalline fraction (CF) content determined according to CRYSTEX analysis in the range from 80.0 to 96.0 wt%, preferably in the range from 82.5 to 95.5 wt%, more preferably in the range from 85.0 to 95.0 wt%, and
∘ a soluble fraction (SF) content determined according to CRYSTEX analysis in the range from 4.0 to 20.0 wt%, preferably in the range from 4.5 to 17.5 wt%, more preferably in the range from 5.0 to 15.0 wt%.

10. Polyolefin composition according to claim 9 **characterized in that** said crystalline fraction (CF) has one or more, preferably all of the following properties:
∘ an ethylene content (C2(CF)), as determined by FT-IR spectroscopy calibrated by quantitative ¹³C-NMR spectroscopy, in the range from 2.5 to 20.0 wt%, preferably in the range from 3.5 to 18.0 wt%, more preferably in the range from 5.0 to 15.0 wt%; and/or
∘ an intrinsic viscosity (iV(CF)), as measured in decalin according to DIN ISO 1628/1 at 135°C, of less than 2.5 dl/g, preferably in the range from 1.1 to 2.5 dl/g, more preferably in the range from 1.2 to 2.5 dl/g, still more preferably in the range from 1.4 to 2.0 dl/g, and
said soluble fraction (SF) has one or more, preferably all of the following properties:
- an ethylene content (C2(SF)), as determined by FT-IR spectroscopy calibrated by quantitative ¹³C-NMR spectroscopy, preferably in the range from 20.0 to 55.0 wt%, preferably in the range from 22.0 to 50.0 wt%, more preferably in the range from 24.0 to 45.0 wt%; and/or
∘ an intrinsic viscosity (iV(SF)), as measured in decalin according DIN ISO 1628/1 at 135°C, in the range from 0.9 to 2.3 dl/g, preferably in the range from 1.0 to 2.2 dl/g, more preferably in the range from 1.1 to 2.1 dl/g.

11. Polyolefin composition according to one of the preceding claims **characterized in that** the at least one C2/C4 and/or C2/C8 elastomer has an MFR₂ (ISO1133, 2.16 kg load at 190 °C) of equal or below 20 g/10 min; preferably of equal or below 10 g/10 min; more preferably of equal or below 5 g/10 min.

12. Polyolefin composition according to one of the preceding claims **characterized in that** the at least one C2/C4 and/or C2/C8 elastomer has a density (ISO1183) of equal or lower than 900 kg/m³, preferably equal or lower than 890 kg/m³, more preferably equal or lower than 880 kg/m³, even more preferably equal or lower than 870 kg/m³, still more preferably equal or lower than 860 kg/m³.

13. Polyolefin composition according to one of the preceding claims, **characterized in that** the at least one polypropylene homopolymer has a MFR₂ (ISO1133, 2.16 kg load at 230 °C) of at least 1000 g/10 min, preferably of at least 1200 g/10min.

14. Use of a polyolefin composition according to one of the preceding claims in the manufacture of appliances, in particular household appliances.

15. An article comprising the polyolefin composition according to one of the claims 1-13.

## Patentansprüche

1. Polyolefinzusammensetzung, umfassend
a) 60 bis 85 Gew.-% (bezogen auf das Gesamtgewicht der Polyolefinzusammensetzung) einer Mischung aus recyceltem Kunststoffmaterial umfassend Polypropylen und Polyethylen in einem Verhältnis zwischen 14:6 und 49,5:1,
b) 10 bis 30 Gew.-% (bezogen auf das Gesamtgewicht der Polyolefinzusammensetzung) mindestens eines C2/C4- und/oder C2/C8-Elastomers als Kompatibilisator mit einem MFR₂ (ISO 1133, 2,16 kg Belastung bei 190 °C) von gleich oder weniger als 30 g/min,
c) 3 bis 10 Gew.-% (bezogen auf das Gesamtgewicht der Polyolefinzusammensetzung) eines Polypropylen-Homopolymers mit einem MFR₂ (ISO 1133, 2,16 kg Belastung bei 230 °C) von mindestens 800 g/10 min, und
d) gegebenenfalls weitere Additive, wobei die Summe aller Bestandteile stets 100 Gew.-% ergibt,
wobei die Polyolefinzusammensetzung **gekennzeichnet ist durch**
- eine Schlagzähigkeit (ISO 179-1, Charpy 1eA bei +23 °C) von mindestens 30 kJ/m²,
- eine Schmelzflussrate MFR₂ (230 °C, 2,16 kg, gemessen nach ISO 1133) von mindestens 15 g/10 min und
- einer Bruchdehnung (ISO 527-2) von mindestens 80 %.

2. Polyolefin-Zusammensetzung nach Anspruch 1, **dadurch gekennzeichnet, dass** sie umfasst:
a) 63 bis 80 Gew.-%, vorzugsweise 65 bis 75 Gew.-% (bezogen auf das Gesamtgewicht der Polyolefinzusammensetzung) einer Mischung aus recyceltem Kunststoffmaterial umfassend Polypropylen und Polyethylen in einem Verhältnis zwischen 14:6 und 49,5:1,
b) 15 bis 25 Gew.-%, vorzugsweise 18 bis 23 Gew.-% (bezogen auf das Gesamtgewicht der Polyolefinzusammensetzung) mindestens eines C2/C4- und/oder C2/C8-Elastomers als Kompatibilisator mit einem MFR₂ (ISO 1133, 2,16 kg Belastung bei 190 °C) von gleich oder weniger als 30 g/min,
c) 4 bis 9 Gew.-%, vorzugsweise 5 bis 7 Gew.-% (bezogen auf das Gesamtgewicht der Polyolefinzusammensetzung) eines Polypropylen-Homopolymers mit einem MFR₂ (ISO 1133, 2,16 kg Belastung bei 230 °C) von mindestens 800 g/10 min, und
d) gegebenenfalls weitere Additive, wobei die Summe aller Bestandteile stets 100 Gew.-% ergibt.

3. Polyolefinzusammensetzung nach einem der vorstehenden Ansprüche, **gekennzeichnet durch** eine Schlagzähigkeit (ISO 179-1, Charpy 1eA bei +23 °C) von mindestens 35,0 kJ/m², vorzugsweise von mindestens 40,0 kJ/m², insbesondere in einem Bereich zwischen 30,0 und 60,0 kJ/m² , noch insbesondere in einem Bereich zwischen 35,0 und 55,0 kJ/m², ganz besonders in einem Bereich zwischen 40,0 und 55,0 kJ/m².

4. Polyolefinzusammensetzung nach einem der vorstehenden Ansprüche, **gekennzeichnet durch** eine Schmelzflussrate MFR₂ (ISO 1133, 2,16 kg, 230 °C) von mindestens 16,0 g/10 min, vorzugsweise mindestens 17,5 g/10 min, noch bevorzugter mindestens 17,5 g/10 min, insbesondere in einem Bereich zwischen 15,0 und 30,0 g/10 min, vorzugsweise zwischen 16,0 und 25,0 g/10 min, noch bevorzugter zwischen 17,0 und 20,0 g/10 min.

5. Polyolefinzusammensetzung nach einem der vorstehenden Ansprüche, **gekennzeichnet durch** eine Bruchdehnung (ISO 527-2) von mindestens 90 %, vorzugsweise von mindestens 100 %, noch bevorzugter von mindestens 150 %, am meisten bevorzugt von mindestens 200 %, insbesondere in einem Bereich zwischen 80 % und 400 %, vorzugsweise zwischen 90 % und 300 %, noch bevorzugter zwischen 100 % und 250 %.

6. Polyolefinzusammensetzung nach einem der vorstehenden Ansprüche, **gekennzeichnet durch** ein Zugmodul (ISO 527-2) von mindestens 800 MPa, vorzugsweise von mindestens 850 MPa, noch bevorzugter von mindestens 870 MPa, insbesondere in einem Bereich zwischen 800 und 1500 MPa, am meisten bevorzugt in einem Bereich zwischen 850 und 1000 MPa.

7. Polyolefinzusammensetzung nach einem der vorstehenden Ansprüche, **dadurch gekennzeichnet, dass** die Polymermischung umfassend Polypropylen und Polyethylen eine Mischung aus recyceltem Kunststoffmaterial umfassend Polypropylen und Polyethylen in einem Verhältnis zwischen 14:6 und 49,5:1 ist und aus Kunststoffabfällen gewonnen wird, die aus Post-Consumer- und/oder Post-Industrial-Abfällen stammen.

8. Polyolefinzusammensetzung nach einem der vorstehenden Ansprüche, **dadurch gekennzeichnet, dass** die Mischung aus recyceltem Kunststoffmaterial umfassend Polypropylen und Polyethylen, eine Schmelzflussrate MFR₂ (230 °C, 2,16 kg, gemessen nach ISO 1133) von mindestens 5,0 g/10 min, vorzugsweise von mindestens 10,0 g/10 min, noch bevorzugter von mindestens 15,0 g/10 min, insbesondere in einem Bereich von 5,0 bis 70,0 g/10 min, vorzugsweise von 8,0 bis 60,0 g/10 min, noch bevorzugter von 10,0 bis 50,0 g/10 min aufweist.

9. Polyolefinzusammensetzung nach einem der vorstehenden Ansprüche, **dadurch gekennzeichnet, dass** die Mischung aus recyceltem Kunststoffmaterial bei der CRYSTEX-Analyse (wie im Versuchsabschnitt beschrieben) die folgenden Eigenschaften aufweist:
∘ einen Gehalt an kristalliner Fraktion (CF), bestimmt gemäß der CRYSTEX-Analyse, im Bereich von 80,0 bis 96,0 Gew.-%, vorzugsweise im Bereich von 82,5 bis 95,5 Gew.-%, noch bevorzugter im Bereich von 85,0 bis 95,0 Gew.-%, und
∘ einen Gehalt an löslicher Fraktion (SF), bestimmt gemäß der CRYSTEX-Analyse, im Bereich von 4,0 bis 20,0 Gew.-%, vorzugsweise im Bereich von 4,5 bis 17,5 Gew.-%, noch bevorzugter im Bereich von 5,0 bis 15,0 Gew.-%.

10. Polyolefinzusammensetzung nach Anspruch 9, **dadurch gekennzeichnet, dass** die kristalline Fraktion (CF) eine oder mehrere, vorzugsweise alle der folgenden Eigenschaften aufweist:
∘ einen Ethylengehalt (C2(CF)), bestimmt durch FT-IR-Spektroskopie, kalibriert durch quantitative ¹³C-NMR-Spektroskopie, im Bereich von 2,5 bis 20,0 Gew.-%, vorzugsweise im Bereich von 3,5 bis 18,0 Gew.-%, noch bevorzugter im Bereich von 5,0 bis 15,0 Gew.-%; und/oder
∘ eine intrinsische Viskosität (iV(CF)), gemessen in Decalin gemäß DIN ISO 1628/1 bei 135 °C, von weniger als 2,5 dl/g, vorzugsweise im Bereich von 1,1 bis 2,5 dl/g, noch bevorzugter im Bereich von 1,2 bis 2,5 dl/g, am meisten bevorzugt im Bereich von 1,4 bis 2,0 dl/g, und
wobei die lösliche Fraktion (SF) eine oder mehrere, vorzugsweise alle der folgenden Eigenschaften aufweist:
- einen Ethylengehalt (C₂(SF)), bestimmt durch FT-IR-Spektroskopie, kalibriert durch quantitative ¹³C-NMR-Spektroskopie, vorzugsweise im Bereich von 20,0 bis 55,0 Gew.-%, vorzugsweise im Bereich von 22,0 bis 50,0 Gew.-%, noch bevorzugter im Bereich von 24,0 bis 45,0 Gew.-%; und/oder
∘ eine intrinsische Viskosität (iV(SF)), gemessen in Decalin gemäß DIN ISO 1628/1 bei 135 °C, im Bereich von 0,9 bis 2,3 dl/g, vorzugsweise im Bereich von 1,0 bis 2,2 dl/g, noch bevorzugter im Bereich von 1,1 bis 2,1 dl/g.

11. Polyolefinzusammensetzung nach einem der vorstehenden Ansprüche, **dadurch gekennzeichnet, dass** das mindestens eine C2/C4- und/oder C2/C8-Elastomer einen MFR₂ (ISO 1133, 2,16 kg Belastung bei 190 °C) von gleich oder weniger als 20 g/10 min; vorzugsweise von gleich oder weniger als 10 g/10 min; noch bevorzugter von gleich oder weniger als 5 g/10 min aufweist.

12. Polyolefinzusammensetzung nach einem der vorstehenden Ansprüche, **dadurch gekennzeichnet, dass** das mindestens eine C2/C4- und/oder C2/C8-Elastomer eine Dichte (ISO 1183) von gleich oder unter 900 kg/m³, vorzugsweise gleich oder weniger 890 kg/m³, noch bevorzugter gleich oder weniger als 880 kg/m³, am meisten bevorzugt gleich oder weniger als 870 kg/m³, am allermeisten bevorzugt gleich oder weniger als 860 kg/m³.

13. Polyolefinzusammensetzung nach einem der vorstehenden Ansprüche, **dadurch gekennzeichnet, dass** das mindestens eine Polypropylen-Homopolymer einen MFR₂ (ISO 1133, 2,16 kg Belastung bei 230 °C) von mindestens 1000 g/10 min, vorzugsweise von mindestens 1200 g/10 min, aufweist.

14. Verwendung einer Polyolefinzusammensetzung nach einem der vorstehenden Ansprüche zur Herstellung von Geräten, insbesondere Haushaltsgeräten.

15. Gegenstand umfassend die Polyolefinzusammensetzung nach einem der Ansprüche 1 bis 13.

## Revendications

1. Composition de polyoléfine comprenant
a) 60 à 85 % en poids (par rapport au poids total de la composition de polyoléfine) d'un mélange de matière plastique recyclée comprenant du polypropylène et du polyéthylène dans un rapport compris entre 14:6 et 49,5:1,
b) 10 à 30 % en poids (par rapport au poids total de la composition de polyoléfine) d'au moins un élastomère en C2/C4 et/ou en C2/C8 servant d'agent de compatibilité, ayant un MFR₂ (ISO 1133, charge de 2,16 kg à 190 °C) égal ou inférieur à 30 g/min,
c) 3 à 10 % en poids (par rapport au poids total de la composition de polyoléfine) d'homopolymère de polypropylène avec un MFR₂ (ISO 1133, charge de 2,16 kg à 230 °C) d'au moins 800 g/10 min, et
d) éventuellement d'autres additifs, la somme de tous les ingrédients s'élevant toujours à 100 % en poids,
dans laquelle la composition de polyoléfine est **caractérisée par**
- une résistance aux chocs (ISO 179-1, Charpy 1eA +23°C) d'au moins 30 kJ/m²,
- un indice de fluage MFR₂ (230 °C, 2,16 kg, mesuré selon ISO 1133) d'au moins 15 g/10 min, et
- une rupture par traction (ISO 527-2) d'au moins 80 %.

2. Composition de polyoléfine selon la revendication 1, **caractérisée en ce qu'**elle comprend
a) 63 à 80 % en poids, de préférence 65 à 75 % en poids (par rapport au poids total de la composition de polyoléfine), d'un mélange de matière plastique recyclée comprenant du polypropylène et du polyéthylène dans un rapport compris entre 14:6 et 49,5:1,
b) 15 à 25 % en poids, de préférence 18 à 23 % en poids (par rapport au poids total de la composition de polyoléfine), d'au moins un élastomère en C2/C4 et/ou en C2/C8 servant d'agent de compatibilité, ayant un MFR₂ (ISO 1133, charge de 2,16 kg à 190 °C) égal ou inférieur à 30 g/min,
c) 4 à 9 % en poids, de préférence 5 à 7 % en poids (par rapport au poids total de la composition de polyoléfine), d'homopolymère de polypropylène avec un MFR₂ (ISO 1133, charge de 2,16 kg à 230 °C) d'au moins 800 g/10 min, et
d) éventuellement d'autres additifs, la somme de tous les ingrédients s'élévant toujours à 100 % en poids.

3. Composition de polyoléfine selon l'une des revendications précédentes, **caractérisée par** une résistance aux chocs (ISO 179-1, Charpy 1eA +23°C) d'au moins 35,0 kJ/m², de préférence d'au moins 40,0 kJ/m², en particulier dans une plage comprise entre 30,0 et 60,0 kJ/m², plus particulièrement dans une plage comprise entre 35,0 et 55,0 kJ/m², encore plus particulièrement dans une plage comprise entre 40,0 et 55,0 kJ/m².

4. Composition de polyoléfine selon l'une des revendications précédentes, **caractérisée par** un indice de fluage MFR₂ (ISO 1133, 2,16 kg, 230°C) d'au moins 16,0 g/10 min, de préférence d'au moins 17,5 g/10 min, plus préférentiellement d'au moins 17,5 g/10 min, en particulier dans une plage comprise entre 15,0 et 30,0 g/10 min, de préférence entre 16,0 et 25,0 g/10 min, plus préférentiellement entre 17,0 et 20,0 g/10 min.

5. Composition de polyoléfine selon l'une des revendications précédentes, **caractérisée par** une rupture par traction (ISO 527-2) d'au moins 90 %, plus préférentiellement d'au moins 100 %, plus préférentiellement encore d'au moins 150 %, et encore plus préférentiellement d'au moins 200 %, en particulier dans une plage comprise entre 80 % et 400 %, de préférence entre 90 % et 300 %, encore plus préférentiellement entre 100 % et 250 %.

6. Composition de polyoléfine selon l'une des revendications précédentes, **caractérisée par** un module de traction (ISO 527-2) d'au moins 800 MPa, de préférence d'au moins 850 MPa, plus préférentiellement d'au moins 870 MPa, en particulier dans une plage comprise entre 800 et 1500 MPa, plus particulièrement dans une plage comprise entre 850 et 1000 MPa.

7. Composition de polyoléfine selon l'une des revendications précédentes, **caractérisée en ce que** le mélange de matière plastique comprenant du polypropylène et du polyéthylène est un mélange de matière plastique recyclée comprenant du polypropylène et du polyéthylène dans un rapport compris entre 14:6 et 49,5:1, qui est récupérée à partir de déchets de matière plastique issus de déchets post-consommation et/ou post-industriels.

8. Composition de polyoléfine selon l'une des revendications précédentes, **caractérisée en ce que** le mélange de matière plastique recyclée comprenant du polypropylène et du polyéthylène présente un indice de fluage MFR₂ (230 °C, 2,16 kg, mesuré selon ISO 1133) d'au moins 5,0 g/10 min, de préférence d'au moins 10,0 g/10 min, plus préférentiellement d'au moins 15,0 g/10 min, en particulier dans une plage comprise entre 5,0 et 70,0 g/10 min, de préférence entre 8,0 et 60,0 g/10 min, plus préférentiellement entre 10,0 et 50,0 g/10 min.

9. Composition de polyoléfine selon l'une des revendications précédentes, **caractérisée en ce que** le mélange de matière plastique recyclée présente les propriétés suivantes lors de l'analyse CRYSTEX (telle que décrite dans la section expérimentale) :
∘ une teneur en fraction cristalline (CF), déterminée selon l'analyse CRYSTEX, dans la plage comprise entre 80,0 et 96,0 % en poids, de préférence dans la plage comprise entre 82,5 et 95,5 % en poids, plus préférentiellement dans la plage comprise entre 85,0 et 95,0 % en poids, et
∘ une teneur en fraction soluble (SF) déterminée selon l'analyse CRYSTEX, dans la plage comprise entre 4,0 et 20,0 % en poids, de préférence dans la plage comprise entre 4,5 et 17,5 % en poids, plus préférentiellement dans la plage comprise entre 5,0 et 15,0 % en poids.

10. Composition de polyoléfine selon la revendication 9, **caractérisée en ce que** ladite fraction cristalline (CF) présente une ou plusieurs, de préférence toutes, des propriétés suivantes :
∘ une teneur en éthylène (C2(CF)), déterminée par spectroscopie FT-IR étalonnée par spectroscopie RMN ¹³C quantitative, dans la plage comprise entre 2,5 et 20,0 % en poids, de préférence dans la plage comprise entre 3,5 et 18,0 % en poids, plus préférentiellement dans la plage comprise entre 5,0 et 15,0 % en poids ; et/ou
∘ une viscosité intrinsèque (iV(CF)), mesurée dans la décaline selon la norme DIN ISO 1628/1 à 135 °C, inférieure à 2,5 dl/g, de préférence dans la plage comprise entre 1,1 et 2,5 dl/g, plus préférentiellement dans la plage comprise entre 1,2 et 2,5 dl/g, et plus préférentiellement encore dans la plage comprise entre 1,4 et 2,0 dl/g, et
ladite fraction soluble (SF) présente une ou plusieurs, de préférence toutes, des propriétés suivantes :
- une teneur en éthylène (C2(SF)), déterminée par spectroscopie FT-IR étalonnée par spectroscopie RMN 13C quantitative, de préférence dans la plage comprise entre 20,0 et 55,0 % en poids, de préférence dans la plage comprise entre 22,0 et 50,0 % en poids, plus préférentiellement dans la plage comprise entre 24,0 et 45,0 % en poids ; et/ou
∘ une viscosité intrinsèque (iV(SF)), mesurée dans la décaline selon la norme DIN ISO 1628/1 à 135 °C, dans la plage comprise entre 0,9 et 2,3 dl/g, de préférence dans la plage comprise entre 1,0 et 2,2 dl/g, plus préférentiellement dans la plage comprise entre 1,1 et 2,1 dl/g.

11. Composition de polyoléfine selon l'une des revendications précédentes, **caractérisée en ce que** ledit au moins un élastomère en C2/C4 et/ou en C2/C8 présente un MFR₂ (ISO 1133, charge de 2,16 kg à 190 °C) égal ou inférieur à 20 g/10 min ; de préférence égal ou inférieur à 10 g/10 min ; plus préférentiellement égal ou inférieur à 5 g/10 min.

12. Composition de polyoléfine selon l'une des revendications précédentes, **caractérisée en ce que** ledit au moins un élastomère en C2/C4 et/ou C2/C8 présente une densité (ISO 1183) égale ou inférieure à 900 kg/m³, de préférence égale ou inférieure à 890 kg/m³, plus préférentiellement égale ou inférieure à 880 kg/m³, encore plus préférentiellement égale ou inférieure à 870 kg/m³, plus préférentiellement encore égale ou inférieure à 860 kg/m³.

13. Composition de polyoléfine selon l'une des revendications précédentes, **caractérisée en ce que** ledit au moins un homopolymère de polypropylène présente un MFR₂ (ISO 1133, charge de 2,16 kg à 230 °C) d'au moins 1000 g/10 min, de préférence d'au moins 1200 g/10 min.

14. Utilisation d'une composition de polyoléfine selon l'une des revendications précédentes dans la fabrication d'appareils, en particulier d'appareils ménagers.

15. Article comprenant la composition de polyoléfine selon l'une des revendications 1 à 13.
